# NEUE EUROPÄISCHE PATENTSCHRIFT

(11) **EP 2 561 024 B2**
(45) Veröffentlichungstag und Bekanntmachung des Hinweises auf die Entscheidung über den Einspruch: **24.07.2024**
(45) Hinweis auf die Patenterteilung: 25.05.2016
(21) Anmeldenummer: 11714268.7
(22) Anmeldetag: 11.04.2011
(51) Int. Cl.: C09D 183/04, C08G 65/336

(54) **BESCHICHTUNGSZUSAMMENSETZUNG ZUM ABDICHTEN VON OBERFLÄCHEN**
COATING COMPOSITION FOR SEALING SURFACES
COMPOSITION DE REVÊTEMENT POUR L'ÉTANCHÉISATION DE SURFACES

(30) Priorität: 23.04.2010 DE 102010028143
(43) Veröffentlichungstag der Anmeldung: 27.02.2013
(60) Teilanmeldung: 15165068.6
(73) Patentinhaber: Wacker Chemie AG, 81737 München (DE)
(72) Erfinder: STANJEK, Volker, 84539 Ampfing (DE); BACHMEIER, Bernd-Josef, 84533 Haiming (DE); BAUER, Andreas, 84375 Kirchdorf (DE)
(74) Vertreter: Mieskes, Klaus Theoderich
(86) Internationale Anmeldenummer: PCT/EP2011/055622
(87) Internationale Veröffentlichungsnummer: WO 2011/131506

(56) Entgegenhaltungen:
- EP-A1- 2 135 852
- DE-A1- 102006 022 834

## Beschreibung

Die Erfindung betrifft eine feuchtigkeitshärtende Beschichtungszusammensetzung enthaltend ein silan-terminiertes Polymer und ein Verfahren zum Abdichten von Oberflächen.

Es ist von enormer Wichtigkeit, anorganische und organische Baustoffe wie Beton oder Holz innen und außen an Gebäuden oder auf dem Dach gegen das Eindringen von Wasser abzudichten, um eine Zerstörung der Materialien mit der Zeit zu verhindern.

Viele häufig in der Vergangenheit verwendete Abdichtungsstoffe wie Bitumen-Bahnen sind auf komplexen Dächern mit vielen Details fast vollkommen verschwunden aufgrund der sehr schwierigen Abdichtung von Ecken und Kanten, Dieses Problem wurde später durch den Einsatz von geschmolzenem Bitumen gelöst, wodurch aber andere Gefahren für den Handwerker durch giftige Dämpfe und dem Umgang der sehr heißen Flüssigkeit entstanden. Andere früher im Einsatz befindliche Lösungen wie lösungsmittelhaltige Bitumen-Systeme wurden aufgrund von VOC-Limitierungen und toxikologischen Gesichtspunkten durch andere Technologien ersetzt.

Heutzutage finden vornehmlich wasserbasierte Beschichtungsmassen wie acrylat- oder polymer-modifizierte Bitumen-Emulsionen Verwendung, aber auch ein- und zweikomponentige Polyurethan-Systeme spielen immer noch eine signifikante Rolle, z.B. in der Dachabdichtung.

Ein großer Nachteil wässriger Emulsionen ist die physikalische Trocknung der Materialien, welche insbesondere unter einer Temperatur von 15 °C sehr langsam wird.

Andererseits verläuft die Trocknung an der Oberfläche oberhalb von 25 °C vergleichsweise schnell, so dass es zu Wassereinschlüssen und nachfolgend zur Blasenbildung kommen kann. So entstehen Schwachstellen in der Beschichtung, die zu Leckagen führen können.

Einkomponentige polyurethanbasierte Abdichtungssysteme enthalten gewöhnlich große Mengen Lösungsmittel, um die Viskosität für ein Streich- oder Roll-Applikation im Dachbereich auf ein akzeptables Niveau zu senken. Zweikomponentige Polyurethansysteme sind im Vergleich dazu sehr teuer und erfordern eine komplizierte Applikationstechnologie, Alle Polyurethan-Abdichtungssysteme enthalten hochtoxische Isocyanatverbindungen, deren Einsatz in nahezu allen Heimwerker-, aber auch in vielen Handwerker-Anwendungen kritisch zu sehen ist.

RTV-1 Silicon-Beschichtungsformulierungen wie Acetat- oder Oxim-Systeme geben bei der Härtung schlecht riechende oder sogar gesundheitsschädliche Spaltprodukte, z.B. Essigsäure oder Oxim, ab. Weitere Nachteile dieser Materialien sind die schlechte Haftung auf einer Vielzahl von Baustoffen, die schlechte Überstreichbarkeit und die ungenügende Bewitterungsstabilität.

Binkomponentige feuchtigkeitshärtende Beschichtungsmassen auf Basis von MS-Polymeren (über ein bestimmtes Herstellverfahren hergestellte silan-terminierte Polyether) sind als Abdichtungsmaterialien zur Anwendung im Baubereich aus EP 1 695 989 A, WO 2007/093382 und WO 2008/077510 bekannt.

Des weiteren beschreibt EP 2135852 Formulierungen auf Basis von silanterminierten Polymeren, die durch Reaktionen von Polyolen und isocyanatfunktionellen Polymeren hergestellt worden sind, die zusätzlich auch noch Aminoalkyl-Alkoxysilane sowie eine relativ geringe Menge, d.h. vorzugsweise 1 bis 5 Gew.-%, Alkyl-Alkoxysilane ohne zusätzliche reaktive organische Funktion enthalten.

Allerdings weisen sämtliche bekannten Produkte z.T. massive Nachteile auf, So ist allen Formulierungen auf Basis herkömmlicher silanvernetzender Prepolymere gemeinsam, dass sie relativ reaktionsträge sind, d.h. für eine vernünftige Hautbildungszeit und eine passable Durchhärtung benötigen sie meist Zinn- Katalysatoren. MS-Polymer-basierenden Formulierungen weisen zudem den Nachteil auf, eine substantielle Restklebrigkeit zu besitzen. Diese führt zu einer schnellen Verschmutzung und ist dementsprechend unerwünscht - insbesondere bei Anwendungen im Dachbereich. Zusätzlich müssen MS-Polymer-basierende Formulierungen zum Erreichen akzeptabler mechanischer Eigenschaften mehr als 25 Gew.-% MS-Polymere als vergleichsweise teurem Formulierungsbestandteil enthalten, wie aus WO 2007/093382 bekannt ist.

Der wichtigste Nachteil aller bekannter Systeme liegt jedoch in den hohen Viskositäten der eingesetzten silanvernetzenden Prepolymere. Um sprüh-, roll- oder streichbare Formulierungen zu erhalten, ist somit in der Regel der Zusatz von organischen Lösungsmitteln und/oder großer Mengen verdünnend wirkender Weichmacher erforderlich. Lösungsmittel als flüchtige organische Bestandteile sind dabei unter Umweltgesichtspunkten unerwünscht, Weichmacher wiederum können im Laufe der Zeit aus dem Produkt "ausschwitzen", was ebenfalls äußerst problematisch sein kann.

Es bestand die Aufgabe, eine einkomponentige, feuchtigkeitshärtende, isocyanat- und bitumen-freie Zusammensetzung bereitzustellen, die zur Abdichtung von Oberflächen, insbesondere von äußeren und inneren Gebäudeoberflächen, Dächern und ähnlichem geeignet ist, die die oben beschriebenen Nachteile nicht mehr aufweist.

Gegenstand der Erfindung ist ein Verfahren zur Abdichtung von Oberflächen, bei dem eine feuchtigkeitshärtende Beschichtungszusammensetzung (C), enthaltend
A) 100 Gewichtsteile silan-terminiertes Polymer (P) mit Endgruppen der allgemeinen Formel (I)

   -A-Si(OR¹)ₓR²₃₋ₓ (I),
B) 30 bis 200 Gewichtsteile reaktiven Weichmacher (RW) der allgemeinen Formel (II),

   R³-Si(OR⁴)_{y}R⁵_{3-y} (II),
C) 0 bis 400 Gewichtsteile Füllstoff (F) und
D) 0,01 bis 20 Gewichtsteile Härtungskatalysator (K),
wobei
**A** eine lineare oder verzweigte Alkylengruppe mit 1 bis 10 Kohlenstoffatomen bedeutet,
**R¹, R⁴** eine lineare oder verzweigte unsubstiuierte oder halogensubstituierte Alkylgruppe mit 1 bis 10 Kohlenstoffatomen bedeutet,
**R², R⁵** eine lineare oder verzweigte unsubstiuierte oder halogensubstituierte Alkylgruppe mit 1 bis 5 Kohlenstoffatomen bedeutet,
**R³** eine Arylgruppe oder eine lineare, verzweigte oder cyclische Alkylgruppe oder Alkenylgruppe mit 6 bis 40 Kohlenstoffatomen bedeutet und
**x, y** 1, 2 oder 3 sind,
   auf die abzudichtende Oberfläche appliziert wird.

Die feuchtigkeitshärtenden Beschichtungszusammensetzung (C) eignet sich hervorragend zum Abdichten von Oberflächen gegen das Eindringen von Wasser oder Wasserdampf. Sie benötigt keine oder nur geringe Mengen an organischen Weichmachern und enthält keine flüchten Lösungsmittel. Sie ist dennoch so dünnflüssig, dass sie sich problemlos durch Streichen, Rollen oder Sprühen applizieren lässt. Zudem kommt sie ohne metallhaltige Katalysatoren, wie zinnhaltige Katalysatoren aus und benötigt vergleichsweise geringe Mengen an vernetzungsfähigen Polymeren. Sie härtet zu klebfreien Beschichtungen aus.

Der Erfindung liegt zum einen die überraschende Entdeckung zugrunde, dass die Weichmacher (RW) den feuchtigkeitshärtenden Beschichtungszusammensetzungen (C) auch in Konzentrationen von mehr als 5 Gew.-% zugesetzt werden können, ohne dass durch diesen Zusatz wichtige Produkteigenschaften verschlechtert werden. So führen vergleichbar große Zusätze herkömmlicher Alkoxysilane, d.h. von nicht erfindungsgemäßen Alkoxysilanen der allgemeinen Formel (II), in denen R³ für eine Alkylgruppe oder eine organofunktionelle Alkylgruppe (z.B. Aminopropylgruppe) mit weniger als 6 Kohlenstoffatome steht, beim Aushärten des Dichtstoffes meist zu Versprödungen, zur Ausbildung nicht glatten und ebenen Oberfächen. Zudem weisen entsprechende Beschichtungen im ausgehärteten Zustand eine verringerte Reißdehnung sowie - insbesondere bei organofunktionellen Silanen - schlechtere hydrophobe und damit wasserabweisende Eigenschaften auf.

Zum anderen liegt der Erfindung die Entdeckung zugrunde, dass sich durch den Zusatz der reaktiven Weichmacher (RW) eine Kombination mehrerer positiver Produkteigenschaften erreichen lässt. So senken die reaktiven Weichmacher (RW) zum einen die Viskosität der Beschichtungszusammensetzungen (C) erheblich. Da sie aber bei der Härtung der Beschichtungszusammensetzung (C) chemisch in das entstehende Netzwerk eingebaut werden, sind die reaktiven Weichmacher weder flüchtig noch können sie aus dem ausgehärteten Dichtstoff ausschwitzen. Gleichzeitig erhöhen sie die Hydrophobie und damit die wasserabweisende Wirkung der ausgehärteten Beschichtungszusammensetzung.

Vorzugsweise weist die Beschichtungszusammensetzung (C) bei 20 °C eine Viskosität von höchstens 20 000 mPa.s auf, wobei Viskositäten von höchstens 10 000 mPa.s bevorzugt und Viskositäten von maximal 5 000 mPa.s besonders bevorzugt werden.

Die Polymere (P) enthalten vorzugsweise Endgruppen der allgemeinen Formel (IV)

~O-C(=O)-NH-A-Si(OR¹)ₓR²₃₋ₓ (IV),

worin sämtliche Variablen die bei der allgemeinen Formel (I) angegebenen Bedeutungen aufweisen.

**A** ist bevorzugt eine Propylen- oder Methylengruppe. Die Methylengruppe ist wegen ihrer hohen Reaktivität gegenüber Feuchtigkeit besonders bevorzugt. Formulierungen enthaltend Polymere (P) mit Endgruppen der allgemeinen Formel (IV), worin **A** eine Methylengruppe ist, haben den Vorteil, dass sie vorzugsweise ohne Metall- und insbesondere ohne Zinn enthaltende Katalysatoren gehärtet werden können.

Selbstverständlich ist es auch möglich, Mischungen aus 2 oder mehreren Polymeren (P) mit Endgruppen der allgemeinen Formeln (I) und/oder (IV) einzusetzen, worin **A, R¹, R²** und **x** unterschiedliche Bedeutung haben, z.B. Polymere (P), worin **R¹** zum Teil für Methyl- und zum Teil für Ethylreste und/oder **A** zum Teil für Propylen- und für Methylengruppen steht.

Vorzugsweise enthalten die feuchtigkeitshärtenden Beschichtungszusammensetzungen (C) Polymere (P) mit Endgruppen der allgemeinen Formel (I) oder - besonders bevorzugt - Endgruppen der allgemeinen Formel (IV) in Konzentration von mindestens 5 Gew.-%, besonders bevorzugt mindestens 8 Gew.-%, insbesondere mindestens 10 Gew.-% und bevorzugt höchstens 50 Gew.-%, besonders bevorzugt höchstens 40 Gew.-%, insbesondere höchstens 25 Gew.-%.

Der reaktive Weichmacher (RW) entspricht vorzugsweise der allgemeinen Formel (V)

R⁶-Si(OR¹)ₓR²₃₋ₓ (V),

worin
R⁶ eine substituierte oder unsubstituierte lineare oder verzweigte Alkylgruppe mit 8 bis 40 Kohlenstoffatomen bedeutet, in der die Kohlenstoffkette durch Sauerstoffatome unterbrochen sein kann,
und alle anderen Variablen die bei der allgemeinen Formel (I) gemäss Anspruch 1 angegebenen Bedeutungen aufweisen.

Vorzugsweise handelt es sich bei **R⁶** um einen reinen verzweigten oder unverzweigten Kohlenwasserstoffrest mit 8 bis 20 Kohlenstoffatomen. Besonders bevorzugte Reste **R⁶** stellen Isooctyl-, Octyl-, Decyl-, Dodecyl-, Tetradecyl und insbesondere Hexadecylreste dar.

Vorzugsweise enthalten die feuchtigkeitshärtenden Beschichtungszusammensetzungen (C) reaktive Weichmacher (RW) mit Endgruppen der allgemeinen Formel (II) oder - besonders bevorzugt - Endgruppen der Formel (V) in Konzentration von höchstens 40 Gew.-%, besonders bevorzugt höchstens 30 Gew.-% und vorzugsweise mindestens 10 Gew.-%, besonders bevorzugt mindestens 15 Gew.-%.
Vorzugsweise enthalten die feuchtigkeitshärtenden Beschichtungszusammensetzungen (C) mindestens 50 Gewichtsteile und vorzugsweise höchstens 150 Gewichtsteile, besonders bevorzugt höchstens 100 Gewichtsteile reaktiven Weichmacher (RW) der allgemeinen Formel (II).

Beispiele für Alkylreste **R¹, R², R⁴** und **R⁵** sind der Methyl-Ethyl-, n-Propyl-, iso-Propyl-, n-Butyl-, iso-Butyl- oder tert.-Butylreste.
**R¹, R⁴** sind vorzugsweise Methyl- oder Ethylreste.
**R², R⁵** sind vorzugsweise Methylreste.
**x, y** sind vorzugsweise 2 oder 3.

Beispiele für Polymere (P), die die Endgruppen der allgemeinen Formel (I) enthalten, sind vorzugsweise Polyester, Polyether, Polyalkylen oder Polyacrylat. Besonders bevorzugt ist ein linearer Polyether, wie ein Polypropylenoxid. Die mittleren Molekulargewichte Mₙ der Polymere (P) betragen vorzugsweise mindestens 2 000 g/mol, besonders bevorzugt mindestens 4 000 g/mol, insbesondere mindestens 10 000 g/mol und vorzugsweise höchstens 25 000 g/mol, besonders bevorzugt höchstens 20 000 g/mol, insbesondere höchstens 19 000 g/mol. Die Viskosität der Polymere (P) beträgt vorzugsweise mindestens 0,2 Pa.s bei 20°C, bevorzugt mindestens 1 Pa.s bei 20°C, besonders bevorzugt mindestens 5 Pa.s bei 20°C und vorzugsweise höchstens 100 Pa.s bei 20°C, bevorzugt höchstens 40 Pa.s bei 20 °C. Die Herstellung der Polymere (P) erfolgt vorzugsweise nach Verfahren, wie sie in WO 2006/136261, EP 1 535 940 A1 oder WO 2007/131986 beschrieben sind.

Als Basis der Beschichtungszusammensetzungen (C)dienen vorzugsweise silanterminierte Polyether, insbesondere silanterminierte Polypropylenglycole, mit Dimethoxymethylsilyl-, Trimethoxysilyl-, Diethoxymethylsilyl- oder Triethoxysilyl-Endgruppen der Formel (IV) unterschiedlicher Viskosität.

Bemerkenswerterweise härten die Beschichtungsformulierungen (C) basierend auf silanterminierten Polymeren (P) mit Endgruppen der allgemeinen Formel (IV) zu komplett klebfreien Beschichtungen aus und unterscheiden sich damit signifikant von silanvernetzenden Abdichtungssystemen auf Basis der sogenannten MS-Polymere, wie sie im Stand der Technik beschrieben sind.

Weiterhin wurde überraschend gefunden, dass die Beschichtungsformulierungen (C) basierend auf silanterminierten Polymeren (P) mit Endgruppen der allgemeinen Formel (IV) bei vergleichsweise niedrigen Gehalten an Polymeren (P) gut durchhärten und die gehärtete Beschichtungen hinreichende mechanische Eigenschaften besitzen.

Ein weiterer Vorteil beim Einsatz von Beschichtungszusammensetzungen (C) mit silanterminierten Polymeren (P) mit Endgruppen der allgemeinen Formel (IV) liegt in der Tatsache, dass sie zum Erreichen einer hinreichenden Härtungsgeschwindigkeit keine oder nur sehr geringen Mengen an metallhaltigen, insbesondere zinnhaltigen Katalysatoren benötigen. Dies gilt insbesondere, wenn die Polymere (P) mindestens zu 40 Mol-% - bevorzugt mindestens zu 50 Mol-% - aus Polymermolekülen mit Endgruppen der allgemeinen Formel (IV) verfügen, bei denen A für eine Methylengruppe steht, da die Endgruppe wie bereits beschrieben über eine besonders hohe Reaktivität verfügt. Daher werden Beschichtungszusammensetzungen (C), auf Basis von Polymeren (P) mit entsprechender Zusammensetzung besonders bevorzugt beansprucht.

Beispiele für reaktive Weichmacher (RW) sind sämtliche Silane mit Alkylgruppen R⁵ mit mindestens 6, bevorzugt mindestens 8 Kohlenstoffatomen. Auf Grund der günstigeren Verfügbarkeit werden dabei Silane der allgemeinen Formel (V) mit Alkylgruppen R⁵ mit einer geraden Anzahl an Kohlenstoffatomen bevorzugt. Beispiele wären Isooctyltrimethoxysilan, Isooctyltriethoxysilan, N-Octyltrimethoxysilan, N-Octyltrimethoxysilan, Decyltrimethoxysilane, Decyltriethoxysilan, Dodecyltrimethoxysilan, Dodecyltriethoxysilan, Tetradecyltrimethoxysiloan, Tetradecyltriethoxysilan, Hexadecyltrimethoxysilan, Hexadecyltriethoxysilan sowie Silane mit noch längeren Alkylgruppen.

Beispiele für Füllstoffe (F) sind Aluminiumtrihydroxid, Calciumcarbonat, Bariumsulfat, Talkum, Glimmer, Kaolin, Kieselsäure, Quarz, Schwerspat und Ruß.

Ein bevorzugter Füllstoff (F) ist Calciumcarbonat. Bevorzugte Calciumcarbonat-Typen sind gemahlen oder gefällt und gegebenenfalls oberflächenbehandelt mit Fettsäuren wie Stearinsäure oder deren Salze. Die Zusammensetzung (C) enthält vorzugsweise mindestens 10 Gew.-%, bevorzugt mindestens 20 Gew.-% und vorzugsweise höchstens 75 Gew.-%, bevorzugt höchstens 70 Gew.-% und besonders bevorzugt höchstens 65 Gew.-% Calciumcarbonat.

Vorzugsweise enthalten die feuchtigkeitshärtenden Beschichtungszusammensetzungen (C) mindestens 20 Gewichtsteile, besonders bevorzugt mindestens 30 Gewichtsteile, insbesondere mindestens 60 Gewichtsteile, insbesondere bevorzugt mindestens 100 Gewichtsteile und vorzugsweise höchstens 300 Gewichtsteile, besonders bevorzugt höchstens 200 Gewichtsteile Füllstoff (F).

Besonders bevorzugte Füllstoffe (F) sind Talkum und Aluminiumtrihydroxid. Diese beiden Füllstofftypen besitzen den Vorteil, die Viskosität der resultierenden Beschichtungszusammensetzung (C) im Vergleich zu anderen Füllstoffen deutlich weniger stark zu erhöhen, Die Zusammensetzung (C) enthält vorzugsweise mindestens 10 Gew.-%, bevorzugt mindestens 20 Gew.-% und vorzugsweise höchstens 75 Gew.-%, bevorzugt höchstens 70 Gew.-% und besonders bevorzugt höchstens 65 Gew.-% Talkum und/oder Aluminiumtrihydroxid,

Ein weiterer besonders bevorzugter Füllstoff (F) ist Kieselsäure, insbesondere pyrogene Kieselsäure. Ganz besonders bevorzugt enthält die Zusammensetzung (C) sowohl Kieselsäure, insbesondere pyrogene Kieselsäure als auch andere Füllstoffe (F), wobei Calciumcarbonat bevorzugt ist. Die Zusammensetzung (C) enthält dann Kieselsäure, insbesondere pyrogene Kieselsäure, in Mengen von vorzugsweise mindestens 0,1 Gew.-%, bevorzugt mindestens 0,4 Gew.-%, und vorzugsweise höchstens 10 Gew.-%, bevorzugt höchstens 5 Gew.-%, und Aluminiumtrihydroxid in den oben angegebenen Mengen, Anstelle des Aluminiumtrihydroxids können auch Talkum, Calciumcarbonat oder aber Mischungen aus Aluminiumtrihydroxid, Talkum und/oder Calciumcarbonat verwendet, werden. Die Menge an sämtliche Füllstoffen (F) zusammen beträgt 80 Gew.-%.

Eine weitere bevorzugte Zusammensetzung (C) ist transparent und enthält ausschließlich Kieselsäure, insbesondere pyrogene Kieselsäure, als Füllstoff (F) in Mengen vorzugsweise von 5 bis 50 Ges.-%.

Beispiele für metallhaltige Härtungskatalysatoren (K) sind organischen Titan- und Zinnverbindungen, beispielsweise Titansäureester, wie Tetrabutyltitanat, Tetrapropyltitanat, Tetraisopropyltitanat und Titantetraacetylacetonat; Zinnverbindungen, wie Dibutylzinndilaurat, Dibutylzinnmaleat, Dibutylzinndiacetat, Dibutylzinndioctanoat, Dibutylzinnacetylacetonat, Dibutylzinnoxide, und entsprechende Dioctylzinnverbindungen.

Beispiele für metallfreie Härtungskatalysatoren (K) sind basische Verbindungen, wie Aminosilane, z.B. 3-Aminopropyltrimethoxysilan, 3-Aminopropyltriethoxysilan, 3-Aminopropyl-methyldimethoxysilan, 3-Aminopropyl-methyldiethoxysilan, N-(2-Aminoethyl)-3-aminopropyltrimethoxysilan, N-(2-Aminoethyl)-3-aminopropyltriethoxysilan, N-(2-Aminoethyl)-3-aminopropyl-methyldimethoxysilan, N-(2-Aminoethyl)-3-aminopropyltriethoxysilan, Cyclohexylaminomethyltriethoxysilan, Cyclohexylaminomethyl-methyldiethoxysilan, Cyclohexylaminomethyltrimethoxysilan, Cyclohexylaminomethyl-methyldimethoxysilan, 3-Cyclohexylaminopropyltrimethoxysilan und 3-Cyclohexylaminopropyl-triethoxysilan, oder auch andere organische Amine, wie Triethylamin, Tributylamin, 1,4-Diazabicyclo [2,2,2] octan, 1,5-Diazabicyclo[4.3.0]non-5-en, 1,8-Diazabicyclo[5.4.0]undec-7-en, N,N-Bis-(N,N-dimethyl-2-aminoethyl) -methylamin, N,N-Dimethylcyclohexylamin, N,N-Dimethylphenylamin und N-Ethylmorpholinin; saure Verbindungen, wie Phosphonsäure and ihre Ester, Toluolsulfonsäure, Schwefelsäure, Salpetersäure oder auch organische Carbonsäuren, z,B. Essigsäure, Benzoesäure.

Die Härtungskatalysatoren (K) können sowohl in reiner Form als auch in Mischungen eingesetzt werden.

Eine bevorzugte Kombination verschiedener Härtungskatalysatoren (K) stellt der gleichzeitige Einsatz von Aminosilanen und Dialkylzinnverbindungen dar. Dabei kann die Beschichtungszusammensetzung (C) einen oder mehrere zinnhaltige Härtungskatalysatoren (K) enthalten, in Mengen von vorzugsweise höchstens 0,5 Gew.-%, bevorzugt höchstens 0,2 Gew.-%, besonders bevorzugt höchstens 0,1 Gew.-%.

Besonders bevorzugt sind die Beschichtungszusammensetzungen (C) jedoch vollständig zinnfrei. Als Katalysator (K) dienen in diesem Fall vorzugsweise Aminosilane, Mischungen verschiedener Aminosilane oder aber Mischungen von Aminosilane mit anderen metallfreier Verbindungen.

Die Beschichtungszusammensetzung (C) enthält vorzugsweise einen oder mehrere Härtungskatalysatoren (K), vorzugsweise metallfreie Härtungskatalysatoren, in Gesamtiningen von vorzugsweise mindestens 0,01 Gew,-%, bevorzugt mindestens 0,05 Gew.-%, und vorzugsweise höchstens 4 Gew,-%, bevorzugt höchstens 2 Gew,-%.

Vorzugsweise enthalten die feuchtigkeitshärtenden Beschichtungszusammensetzungen (C) höchstens 10 Gewichtsteile, besonders bevorzugt höchstens 5 Gewichtsteile, insbesondere höchstens 1 Gewichtsteil Härtungskatalysatoren (K).

Eine zinnfreie Zusammensetzung der Beschichtungszusammensetzungen (C) gelingt vorzugsweise durch Einsatz von Polymeren (P) mit Endgruppen der allgemeinen Formel (IV), bei denen A eine Methylengruppe darstellt. Die Verwendung zinnfreier Beschichtungszusammensetzungen (C) auf Basis dieser Polymere stellt somit eine besonders bevorzugte Ausführung der Erfindung dar.

Die Beschichtungszusammensetzungen (C) können vorzugsweise bis zu 20, insbesondere bis zu 10 Gewichtsteile einer oder mehrerer Wasserfänger (W) enthalten. Beispiele für Wasesrfänger (W) sind Silane wie Vinyltrimethoxysilan, Vinyltriethoxysilan, Vinylmethyldimethoxysilan, O-Methylcarbamatomethyl-methyldimethoxysilan, O-Methylcarbamatomethyl-trimethoxysilan, O-Ethylcarbamatomethyl-methyldiethoxysilan, O-Ethylcarbamatomethyl-triethoxysilan, 3-Methacryloxypropyltrimethoxysilan, Methacryloxymethyl-trimethoxysilan, Methacryloxymethyl-methyldimethoxysilan, Methacryloxymethyltriethoxysilan, Methacryloxymethyl-methyldiethoxysilan, 3-Acryloxypropyl-trimethoxysilan, Acryloxymethyltrimethoxysilan, Acryloxymethyl-methyldimethoxysilane, Acryloxymethyl-triethoxysilan, Acryloxymethylmethyldiethoxysilan, Aminosilane, wobei u.a. dieselben Aminosilane, die bereits als Katalysatoren (K) beschrieben worden sind, zum Einsatz kommen können, und Orthoester, wie 1,1,1-Trimethoxyethan, 1,1,1-Triethoxyethan, Trimethoxymethan, Triethoxymethan und verwandte Verbindungen.

Die Beschichtungszusammensetzungen (C) enthalten vorzugsweise mindestens 0,1 Gew,-%, bevorzugt mindestens 0,5 Gew.-%, und vorzugsweise höchstens 5 Gew.-%, besonders bevorzugt höchstens 2 Gew.-% eines oder mehrerer Wasserfänger (W).

Die Beschichtungszusammensetzungen (C) können vorzugsweise bis zu 20, insbesondere bis zu 10 Gewichtsteile einer oder mehnerer Haftvermittler (H) enthalten, Beispiele für Haftvermittler (H) sind Aminosilane, wobei u.a. dieselben Aminosilane, die bereits als Katalysatoren (K) beschrieben worden sind, zum Einsatz kommen können. Epoxysilane wie Glycidoxypropylmethyldimethoxysilan, Glycidoxyoropyltriethoxysilan oder Glycidoxypropyl-methyldiethoxysilan, sowie andere Silane mit organofunktionellen Gruppen wie beispielsweise 2-(3-Triethoxysilylproypl)-maleinsäureanhydrid, N- (3-Trimethoxysilylpropyl)-harnstoff, N-(3-Triethoxysilylpropyl)-harnstoff, N-(Trimethoxysilylmethyl)-harnstoff, N-(Methyldimethoxysilymethyl)-harnstoff, N-(3-Triethoxysilylmethyl)-harnstoff, N-(3-Methyldiethoxysilylmethyl)harnstoff, O-Methylcarbamatomethyl-methyldimethoxysilan, O-Methylcarbamatomethyl-trimethoxysilan, O-Ethylcarbamatomethyl-methyldiethoxysilan, O-Ethylcarbamatomethyl-triethoxysilan, 3-Methacryloxypropyltrimethoxysilan, Methacryloxymethyl-trimethoxysilan, Methacryloxymethyl-methyldimethoxysilan, Methacryloxymethyltriethoxysilan, Methacryloxymethyl-methyldiethoxysilan, 3-Acryloxypropyl-trimethoxysilan, Acryloxymethyltrimethoxysilan, Acryloxymethyl-methyldimethoxysilane, Acryloxymethyl-triethoxysilan, Acryloxymethylmethyldiethoxysilan können als Haftvermittler eingesetzt werden.

Die Beschichtungszusammensetzung (C) enthält einen oder mehrere Haftvermittler (H) in Mengen von vorzugsweise mindestens 0,01 Gew.-%, bevorzugt mindestens 0,5 Gew.-% und vorzugsweise höchstens 5 Gew.-%, bevorzugt höchstens 2 Gew.-%.

Werden als Härtungskatalysatoren (K) Aminosilane eingesetzt, so dienen sie vorzugsweise auch gleichzeitig als Wasserfänger (W) und/oder Haftvermittler (H). Die Menge an Aminosilanen in den Beschichtungszusammensetzungen beträgt vorzugsweise mindestens 0,01 Gew.-%, bevorzugt mindestens 0,5 Gew.-%, und vorzugsweise höchstens 5 Gew.-%, bevorzugt höchstens 3 Gew.-%.

Vorzugsweise enthalten die feuchtigkeitshärtenden Beschichtungszusammensetzungen (C) bis zu 100, insbesondere bis zu 50 Gewichtsteile eines oder mehrerer Tetraalkoxysilane (TS) der allgemeinen Formel (III)

Si(OR⁶)₄ (III),

worin
R⁶ eine lineare oder verzweigte, gegebenenfalls halogenierte Alkylgruppe mit 1 bis 10 Kohlenstoffatomen bedeutet, und/oder Teilkondensate der Tetraalkoxysilane (TS).

Bevorzugt wird in den Beschichtungszusammensetzungen (C) Tetraethoxysilan und besonders bevorzugt werden Teilkondensate des Tetraethoxysilans mit einem mittleren Kondensationsgrad von 1,5-15, besonders bevorzugt mit einem mittleren Kondensationsgrad von 3 bis 8 eingesetzt. Die Menge an Tetraalkoxysilanen (TS) der allgemeinen Formel (III) und/oder Teilkondensate dieser Tetraalkoxysilane in den Beschichtungszusammensetzungen (C) beträgt vorzugsweise mindestens 0,01 Gew.-%, bevorzugt mindestens 0,5 Gew.-%, und vorzugsweise höchstens 20 Gew.-%, bevorzugt höchstens 10 Gew.-%.

Die Beschichtungszusammensetzungen (C) können für feuchtigkeitshärtende Beschichtungszusammensetzungen übliche weitere Stoffe enthalten. Dazu gehören nicht reaktive Weichmacher, Rheologie-Additive, Stabilisatoren wie Antioxidantien, UV-Stabilisatoren, Fungizide, Pigmente, Flammschutzmittel und Lösungsmittel.

Die Beschichtungszusammensetzung (C) kann vorzugsweise bis zu 50, insbesondere bis zu 10 Gewichtsteile eines oder mehrerer Weichmacher, bevorzugt nicht reaktive Weichmacher wie Phthalsäureester (z.B. Dioctylphthalat, Diisooctylphthalat, Diundecylphthalat etc.), perhydrierte Phthalsäureester (z.B. 1,2-Cyclohexandicarbonsäurediisononylester, 1,2-Cyclohexandicarbonsäuredioctylester etc.), Adipinsäureester (z.B. Dioctyladipat etc.), Benzoesäureester, Glycolester, Ester gesättigter Alkandiole (z.B. 2,2,4-Trimethyl-1,3-pentandiolmonoisobutyrate, 2,2,4-Trimethyl-1,3-pentandioldiisobutyrate), Phosphorsäureester, Sulfonsäureester, Polyester, Polyether (z.B. Polyethylenglycole, Polypropylenglycole etc.), Polystyrole, Polybutadiene, Polyisobutylene, paraffinische Kohlenwasserstoffe und hochmolekulare, verzweigte Kohlenwasserstoffe enthalten. Die Gesamtmenge an allen in der Zusammensetzung (C) enthaltenen Weichmachern beträgt vorzugsweise höchstens 30 Gew,-%, bevorzugt höchstens 20 Gew.-% und besonders bevorzugt höchstens 10 Ges.-%.

Die Beschichtungsformulierung (C) kann ein oder mehrere Rheologie-Additive, wie z.B. hydrophile pyrogene Kieselsäure, beschichtete hydrophobe pyrogene Kieselsäure, gefällte Kieselsäure, Polyamidwachse, hydrierte Rizinusöle, Stearate and gefällte Calciumcarbonate enthalten, wobei diese in Mengen von vorzugsweise mindestens 0,1 Ges.-%, bevorzugt mindestens 0,5 Gew.-%, und vorzugsweise höchstens 10 Gew.-%, bevorzugt höchstens 5 Gew,-%, eingesetzt werden.

Die Beschichtungsformulierung (C) kann weiterhin Stabilisatoren, wie Lichtstabilisatoren (z.B. HALS-Verbindungen), Fungizide, Flammschutzmittel, Pigmente, Lösungsmittel oder andere für einkomponentige, silanvernetzende Systeme typische Additive enthalten,

Folgende Beschichtungszusammensetzung (C) ist bevorzugt:

| | |
|---|---|
| 13 bis 35 Gew.-%, | silan-terminierte Polymere (P) |
| 6 bis 30 Gew.-% | reaktive Weichmacher (RW) |
| 10 bis 70 Gew.-% | Aluminiumtrihydroxid, Talkum, Glimmer oder Calciumcarbonat |
| 0,5 bis 4 Gew.-% | Wasserfänger (W) |
| 0,05 bis 3 Gew.-% | Härtungskatalysatoren (K), insbesondere zinnfreie Härtungskatalysatoren |
| 0,1 bis 5 Gew.-% | Haftvermittler (A) |
| 0,1 bis 10 Gew.-% | Tetraalkoxysilane (TS) |
| 0 bis 20 Gew.-% | Weichmacher |
| 0 bis 5 Gew.-% | Rheologie-Additive |
| 0 bis 5 Gew.-% | Stabilisatoren und Pigmente |
| 0 bis 30 Gew.-% | Flammschutzmittel |
| 0 bis 10 Gew.-% | Lösungsmittel, |

wobei sich die Gesamtmengen auf 100 Gew.-% ergänzen.

Die Menge an reaktivem Weichmacher (RW) in dieser bevorzugten Beschichtungszusammensetzung (C) liegt vorzugsweise bei über 10 Gew.-%, besonders bevorzugt bei mindestens 15 Ges.-%.

In einer bevorzugten Ausführungsform sind dies Beschichtungszusammensetzungen (C) lösungsmittelfrei. In einer besonders bevorzugten Ausführungsform sind die Beschichtungszusammensetzungen (C) lösungsmittel- und weichmacherfrei.

Die Herstellung der Beschichtungszusammensetzungen (C) kann nach Methoden und Mischverfahren erfolgen, wie sie zur Herstellung von feuchtigkeitshärtenden Beschichtungszusammensetzungen üblich sind.

Beim Verfahren zur Abdichtung von Oberflächen erfolgt die Applikation der Beschichtungszusammensetzungen (C) vorzugsweise mittels Pinsel, Roller, Rakel oder kommerziellen Sprühgeräten wie Airless-Geräten.

Die Beschichtungszusammensetzungen (C) werden vorzugsweise in einer Schichtdicke von 0,1 bis 5 mm aufgetragen.

Die Beschichtungszusammensetzungen (C) und das erfindungsgemäße Verfahren eignen sich zum Abdichten von Oberflächen gegen das Eindringen von Wasser. Sie eignen sich zum Abdichten von Oberflächen von äußeren Gebäudeoberflächen, inneren Gebäudeflächen (z.B. in Feuchträumen, wobei die beschichteten Oberflächen danach auch noch mit Fliesen oder sonstigen dekorativen Materialien belegt werden können), Dächern und ähnlichem. Ferner können die Beschichtungszusammensetzungen (C.) auch als Dämpfungs- und akustisch isolierendes Material verwendet werden.

Beispiele für Oberflächen auf die die Beschichtungszusammensetzungen (C) aufgetragen werden können, sind mineralische Baustoffe, Metalle, Dachpappen, Kunststoffe, Fasergewebe, Glas oder Keramik. Die Beschichtungszusammensetzungen zeigen thixotropes Verhalten und können sowohl auf horizontale als auch vertikale Flächen appliziert werden.

Die Beschichtungszusammensetzungen (C) werden vorzugsweise auf die zu beschichtenden Oberflächen aufgetragen und härten gelassen. Die Härtung erfolgt vorzugsweise bei Temperaturen von 0 bis 50 °C, bevorzugt 10 bis 40 °C und beim Druck der umgebenden Atmosphäre (ca. 1020 hPa). Die Härtung kann aber auch bei höheren oder niedrigeren Drücken erfolgen.

Die nach der Härtung erhaltenen Beschichtungen zeichnen sich durch eine hervorragende Elastizität, hohe Bewitterungsstabilität und gute Überstreichbarkeit aus.

Alle vorstehenden Symbole der vorstehenden Formeln weisen ihre Bedeutungen jeweils unabhängig voneinander auf. In allen Formeln ist das Siliciumatom vierwertig.

Soweit nicht anders angegeben, sind in den folgenden Beispielen alle Mengen- und Prozentangaben auf das Gewicht bezogen, alle Drücke 0,10 MPa (abs.) und alle Temperaturen 20°C. Der Ausdruck "Gew.-%" bezieht sich ausnahmslos immer auf die gesamte Beschichtungszusammensetzung (C).

### Beispiel 1:

20,0 g GENIOSIL^{®} STP-E10 (silan-terminiertes Polymer P; ein Polypropylenglycol mit Endgruppen der allgemeinen Formel (IV) mit A = Methylenrest, R¹ = Methylrest, R² = Methylrest und x = 2, käuflich erwerblich bei Wacker Chemie AG), 10,0 g GENIOSIL^{®} STP-E15 (silan-terminiertes Polymer P; ein Polypropylenglycol mit Endgruppen der allgemeinen Formel (IV) mit A = Propylenrest, R¹ = Methylrest und x = 3, käuflich erwerblich bei Wacker Chemie AG), 23,5 g Hexadecyltrimethoxysilan, 2,0 g Vinyltrimethoxysilan, 1,0 g hydrophobe Kieselsäure (HDK^{®} H2000; käuflich erwerblich bei Wacker Chemie AG), 21,0 g Aluminiumtrihydrat (ATH), 21,5 g Talkum und 1,0 g 3-Aminopropyltrimethoxysilan werden in einem geeigneten Mischgerät vermischt.
Man erhält eine beige Dichtmasse einer Viskosität von 15000 mPa s (Brookfield, Spindel 6, 5,0 min⁻¹) bzw. 4800 mPa s (Brookfield, Spindel 6, 50 min⁻¹). Aus dieser Mischung wird ein Probekörper der Maße 255 x 130 x 2 mm gegossen und die in der Tabelle I angegebenen Mechanikwerte bestimmt:

| | |
|---|---|
| Shore Härte | 59,0 |
| DIN 53505-A-87 | |
| | |
| Spannungswerte [N/mm²] | |
| DIN 53504-85 / Normstab S1. | |
| 50% | 1,34 |
| 100% | 1,79 |
| 150% | 2,03 |
| | |
| Reissfestigkeit [N/mm²] | 2,07 |
| DIN 53504-85 / Normstab S1 | |
| | |
| Reissdehnung | 166,02 |
| | |
| Weiterreisswiderstand [N/mm] | 14,35 |
| ASTM D 624 B - 91 | |

### Beispiel 2:

20,0 g GENIOSIL^{®} STP-E10 (silan-terminiertes Polymer P; ein Polypropylenglycol mit Endgruppen der allgemeinen Formel (IV) mit A = Methylenrest, R¹= Methylrest, R²= Methylrest und x = 2, käuflich erwerblich bei Wacker Chemie AG), 10,0 g GENIOSIL^{®} STP-E15 (silan-terminiertes Polymer P; ein Polypropylenglycol mit Endgruppen der allgemeinen Formel (IV) mit A = Propylenrest, R¹= Methylrest und x = 3, käuflich erwerblich bei Wacker Chemie AG), 23,5 g Phenyltriethoxysilan, 2,0 g Vinyltrimethoxysilan, 1,0 g hydrophobe Kieselsäure
(HDK^{®} H2000; käuflich erwerblich bei Wacker Chemie AG), 21,0 g Aluminiumtrihydrat (ATH), 21,5 g Talkum und 1,0 g 3-Aminopropyltrimethoxysilan werden in einem geeigneten Mischgerät vermischt. Man erhält eine beige Dichtmasse einer Viskosität von 10600 mPa s (Brookfield, Spindel 6, 5,0 min⁻¹ )bzw. 4500 mPa s (Brookfield, Spindel 6, 50 min⁻¹). Aus dieser Mischung wird ein Probekörper der Maße 255 x 130 x 2 mm gegossen und die in der Tabelle II angegebenen Mechanikwerte bestimmt:

| | |
|---|---|
| Shore Härte | 55,0 |
| DIN 53505-A-87 | |
| | |
| Spannungswerte [N/mm²] | |
| DIN 53504-85 / Normstab S1 | |
| 50% | 1,03 |
| 100% | 1,79 |
| 150% | 2,35 |
| 200% | 2,54 |
| | |
| Reissfestigkeit [N/mm²] | 2,58 |
| DIN 53504-85 / Normstab S1 | |
| | |
| Reissdehnung | 195 |
| | |
| Weiterreisswiderstand [N/mm] | 14,99 |
| ASTM D 624 B - 91 | |

### Beispiel 3:

20,0 g GENIOSIL^{®} STP-E10 (silan-terminiertes Polymer P; ein Polypropylenglycol mit Endgruppen der allgemeinen Formel (IV) mit A = Methylenrest, R¹ = Methylrest, R² = Methylrest und x = 2, käuflich erwerblich bei Wacker Chemie AG), 10,0 g GENIOSIL^{®} STP-E15 (silan-terminiertes Polymer P; ein Polypropylenglycol mit Endgruppen der allgemeinen Formel (IV) mit A = Propylenrest, R¹ = Methylrest und x = 3, käuflich erwerblich bei Wacker Chemie AG), 23,5 g Isooctyltrimethoxysilan, 2,0 g Vinyltrimethoxysilan, 1,5 g hydrolysiertes Tetraethylsilikat (WACKER^{®} SILIKAT TES 40 WN; käuflich erwerblich bei Wacker Chemie AG), 0,5 g hydrophobe Kieselsäure (HDK^{®} H2000; käuflich erwerblich bei Wacker Chemie AG), 20,0 g Aluminiumtrihydrat (ATH), 22,4 g Talkum, und 0,1 g (N-Cyclohexylaminomethyl)triethoxysilan werden in einem geeigneten Mischgerät vermischt. Man erhält eine beige Dichtmasse einer Viskosität von 15600 mPa s (Brookfield, Spindel 6, 5,0 min⁻¹ )bzw. 4800 mPa s (Brookfield, Spindel 6, 50 min⁻¹ ). Aus dieser Mischung wird ein Probekörper der Maße 255 x 130 x 2 mm gegossen und die in der Tabelle III angegebenen Mechanikwerte bestimmt:

| | |
|---|---|
| Shore Härte | 64,0 |
| DIN 53505-A-87 | |
| | |
| Spannungswerte [N/mm²] | |
| DIN 53504-85 / Normstab S1 | |
| 50% | 1,78 |
| 100% | 2,05 |
| 150% | |
| | |
| Reissfestigkeit [N/mm²] | 2,21 |
| DIN 53504-85 / Normstab S1 | |
| | |
| Reissdehnung | 94 |
| | |
| Weiterreisswiderstand [N/mm] | 9,84 |
| ASTM D 624 B - 91 | |

### Beispiel 4 (nicht erfindungsgemäss):

20,0 g GENIOSIL^{®} STP-E10 (silan-terminiertes Polymer P; ein Polypropylenglycol mit Endgruppen der allgemeinen Formel (IV) mit A = Methylenrest, R¹ = Methylrest, R² = Methylrest und x = 2, käuflich erwerblich bei Wacker Chemie AG), 10,0 g GENIOSIL^{®} STP-E15 (silan-terminiertes Polymer P; ein Polypropylenglycol mit Endgruppen der allgemeinen Formel (IV) mit A = Propylenrest, R¹ = Methylrest und x = 3, käuflich erwerblich bei Wacker Chemie AG), 23,5 g Siliconharz (SILRES^{®} SY 231; käuflich erwerblich bei Wacker Chemie AG), 2,0 g Vinyltrimethoxysilan, 1,0 g Hydrophobe Kieselsäure (HDK^{®} H2000; käuflich erwerblich bei Wacker Chemie AG), 20,5 g Aluminiumtrihydrat (ATH), 21,0 g Talkum und 2,0 g 3-Aminopropyltrimethoxyailan werden in einem geeigneten Mischgerät vermischt. Man erhält eine beige Dichtmasse einer Viskosität von 28400 mPa s (Brookfield, Spindel 6, 5,0 min⁻¹) bzw, 143200 mPa s (Brookfield, Spindel 6, 50 min⁻¹). Aus dieser Mischung wird ein Probekörper der Maße 255 x 130 x 2 mm gegossen und die in der Tabelle IV angegebenen Mechanikwerte bestimmt:

| | |
|---|---|
| Shore Härte | 71,0 |
| DIN 53505-A-87 | |
| | |
| Spannungswerte [N/mm²] | |
| DIN 53504-85 / Normstab S1 | |
| 50% | 3,18 |
| 100% | |
| 150% | |
| 200% | |
| | |
| Reissfestigkeit [N/mm²] | 4,06 |
| DIN 53504-85 / Normstab S1 | |
| | |
| Reissdehnung | 97 |
| | |
| Weiterreiaswiderstand [N/mm] | 25,66 |
| ASTM D 624 B - 91 | |

## Patentansprüche

1. Verfahren zur Abdichtung von Oberflächen, bei dem eine feuchtigkeitshärtende Beschichtungszusammensetzung (C), enthaltend
A) 100 Gewichtsteile silan-terminiertes Polymer (P) mit Endgruppen der allgemeinen Formel (I)
-A-Si(OR¹)ₓR²₃₋ₓ (I),
B) 30 bis 200 Gewichtsteile reaktiven Weichmacher (RW) der allgemeinen Formel (II)',
R³-Si(OR⁴)_{y}R⁵_{3-y} (II),
C) 0 bis 400 Gewichtsteile Füllstoff (F) und
D) 0,01 bis 20 Gewichtsteile Härtungskatalysator (K), wobei
**A** eine lineare oder verzweigte Alkylengruppe mit 1 bis 10 Kohlenstoffatomen bedeutet,
**R¹, R⁴** eine lineare oder verzweigte unsubstiuierte oder halogensubstituierte Alkylgruppe mit 1 bis 10 Kohlenstoffatomen bedeutet,
**R², R⁵** eine lineare oder verzweigte unsubstiuierte oder halogensubstituierte Alkylgruppe mit 1 bis 5 Kohlenstoffatomen bedeutet,
**R³** eine Arylgruppe oder eine lineare, verzweigte oder cyclische Alkylgruppe oder Alkenylgruppe mit 6 bis 40 Kohlenstoffatomen bedeutet und
**x, y** 1, 2 oder 3 sind,
auf die abzudichtende Oberfläche appliziert wird.

2. Verfahren nach Anspruch 1, bei der die Polymere (P) Endgruppen der allgemeinen Formel (IV)
~O-C(=O)-NH-A-Si(OR¹)ₓR²₃₋ₓ (IV),
enthalten, worin sämtliche Variablen die bei der allgemeinen Formel (I) gemäß Anspruch 1 angegebenen Bedeutungen aufweisen.

3. Verfahren nach Anspruch 1 oder 2, bei der A eine Propylen- oder Methylengruppe ist.

4. Verfahren nach Anspruch 1 bis 3, bei der die Polymere (P) ausgewählt werden aus Polyestern, Polyethern, Polyalkylen und Polyacrylat.

5. Verfahren nach Anspruch 1 bis 4, die mindestens 20 Gewichtsteile Füllstoff (F) enthält.

6. Verfahren nach Anspruch 1 bis 5, bei der die Füllstoffe (F) ausgewählt werden aus Aluminiumtrihydroxid, Calciumcarbonat, Bariumsulfat, Talkum, Glimmer, Kaolin, Kieselsäure, Quarz, Schwerspat und Ruß.

7. Verfahren nach Anspruch 1 bis 6, bei der die Härtungskatalysatoren (K) ausgewählt werden aus organischen Titan- und Zinnverbindungen, Aminosilanen, organischen Aminen und sauren Verbindungen.

8. Verfahren nach Anspruch 1 bis 7, wobei die auf die abzudichtende Oberfläche applizierte Beschichtungszusammensetzung (C) bei Temperaturen von 0 bis 50 °C ausgehärtet wird.

## Claims

1. Method for sealing surfaces of external building surfaces and internal building areas, by applying to the surface to be sealed a moisture-curing coating composition (C), comprising
A) 100 parts by weight of silane-terminated polymer (P) having end groups of the general formula (I)
-A-Si(OR¹)ₓR²₃₋ₓ (I),
B) 30 to 200 parts by weight of reactive plasticizer (RW) of the general formula (II),
R³-Si(OR⁴)_{y}R⁵_{3-y} (II),
C) 0 to 400 parts by weight of filler (F), and
D) 0.01 to 20 parts by weight of curing catalyst (K), where
**A** is a linear or branched alkylene group having 1 to 10 carbon atoms,
**R¹** and **R⁴** are each a linear or branched, unsubstituted or halogen-substituted alkyl group having 1 to 10 carbon atoms,
**R²** and **R⁵** are each a linear or branched, unsubstituted or halogen-substituted alkyl group having 1 to 5 carbon atoms,
**R³** is an aryl group or a linear, branched or cyclic alkyl group or alkenyl group having 6 to 40 carbon atoms, and
**x** and **y** are 1, 2 or 3.

2. Method according to Claim 1, wherein the polymers (P) comprise end groups of the general formula (IV)
~O-C(=O)-NH-A-Si(OR¹)ₓR²₃₋ₓ (IV),
in which all of the variables have the definitions indicated for the general formula (I) according to Claim 1.

3. Method according to Claim 1 or 2, wherein A is a propylene or methylene group.

4. Method according to Claim 1 to 3, wherein the polymers (P) are selected from polyesters, polyethers, polyalkylene, and polyacrylate.

5. Method according to Claim 1 to 4, comprising at least 20 parts by weight of filler (F).

6. Method according to Claim 1 to 5, wherein the fillers (F) are selected from aluminium trihydroxide, calcium carbonate, barium sulfate, talc, mica, kaolin, silica, quartz, heavy spar, and carbon black.

7. Method according to Claim 1 to 6, wherein the curing catalysts (K) are selected from organic titanium and tin compounds, aminosilanes, organic amines, and acidic compounds.

8. Method according to Claim 1 to 7, the coating composition (C) applied to the surface to be sealed being cured at temperatures from 0 to 50°C.

## Revendications

1. Procédé pour l'étanchéification de surfaces de surfaces extérieures de bâtiments et de surfaces intérieures de bâtiments, dans lequel on applique sur la surface à étanchéifier une composition de revêtement (C) durcissant à l'humidité, contenant
A) 100 parties en poids d'un polymère (P) à terminaison silane comprenant des groupes terminaux de formule générale (I)
-A-Si(OR¹)ₓR²₃₋ₓ (I),
B) 30 à 200 parties en poids de plastifiants réactifs (RW) de formule générale (II),
R³-Si(OR⁴)_{y}R⁵_{3-y} (II),
C) 0 à 400 parties en poids d'une charge (F) et
D) 0,01 à 20 parties en poids d'un catalyseur de durcissement (K),
dans lesquelles
**A** représente un groupe alkylène linéaire ou ramifié ayant 1 à 10 atomes de carbone,
**R¹, R⁴** représentent un groupe alkyle linéaire ou ramifié, non substitué ou à substitution halogène, ayant 1 à 10 atomes de carbone,
**R², R⁵** représentent un groupe alkyle linéaire ou ramifié, non substitué ou à substitution halogène, ayant 1 à 5 atomes de carbone,
**R³** représente un groupe aryle ou un groupe alkyle ou un groupe alcényle linéaire, ramifié ou cyclique, ayant 6 à 40 atomes de carbone, et
**x, y** représentent 1, 2 ou 3.

2. Procédé selon la revendication 1, dans lequel les polymères (P) contiennent des groupes terminaux de formule (IV)
~O-C(=O)-NH-A-Si(OR¹)ₓR²₃₋ₓ (IV),
dans laquelle toutes les variables ont les significations indiquées pour la formule générale (I) selon la revendication 1.

3. Procédé selon la revendication 1 ou 2, dans lequel **A** représente un groupe propylène ou méthylène.

4. Procédé selon les revendications 1 à 3, dans lequel les polymères (P) sont choisis parmi les polyesters, les polyéthers, le polyalkylène et le polyacrylate.

5. Procédé selon les revendications 1 à 4, contenant au moins 20 parties en poids de la charge (F).

6. Procédé selon les revendications 1 à 5, dans lequel les charges (F) sont choisies parmi le trihydroxyde d'aluminium, le carbonate de calcium, le sulfate de baryum, le talc, le mica, le kaolin, la silice, le quartz, la barytine et le noir de carbone.

7. Procédé selon les revendications 1 à 6, dans lequel les catalyseurs de durcissement (K) sont choisis parmi les composés organiques du titane et de l'étain, les aminosilanes, les amines organiques et les composés acides.

8. Procédé selon les revendications 1 à 7, dans lequel la composition de revêtement (C) appliquée sur la surface à étanchéifier est durcie à des températures de 0 à 50 °C.
